# EUROPEAN PATENT SPECIFICATION

(11) **EP 0 715 703 B1**
(45) Date of publication and mention of the grant of the patent: **20.09.2000**
(21) Application number: 94918521.9
(22) Date of filing: 09.06.1994
(51) Int. Cl.: F17C 1/00, F17C 13/00, B60K 15/03

(54) **IMPROVEMENTS TO LIQUID PROPANE GAS TANKS AND, IN PARTICULAR TO CYLINDRICAL TANKS FOR VEHICLES**
VERBESSERUNGEN AN PROPANFLÜSSIGGASBEHÄLTERN INSBESONDERE AN ZYLINDRISCHEN FAHRZEUGBEHÄLTERN
AMELIORATIONS APPORTEES A DES RESERVOIRS A GAZ PROPANE LIQUIDE ET EN PARTICULIER A DES RESERVOIRS CYLINDRIQUES POUR VEHICULES

(30) Priority: 10.06.1993 IT RM930381; 25.03.1994 IT RM940165
(43) Date of publication of application: 12.06.1996
(73) Proprietor: I.C.O.M. S.R.L., I-04012 Cisterna di Latina (IT)
(72) Inventor: CIPPITANI, Luciano, I-04012 Cisterna di Latina (IT)
(74) Representative: Münich, Wilhelm, Dr.
(86) International application number: IT9400082
(87) International publication number: WO9429639

(56) References cited:
- EP-A- 0 013 579
- EP-A- 0 299 200
- WO-A-93/03304
- DE-C- 949 403
- FR-A- 1 345 658
- US-A- 2 319 844
- US-A- 5 097 976

## Description

### Background Art

The reason why cylindrical tanks for LPG (liquid propane gas) fuel systems for vehicles are so widespread is that, for many years now they have been the only type of fuel tank of this kind available. These cylindrical tanks feature the valve group ring located right in the middle of the tank or on the side of the cylindrical ferrule. The tank is generally located in a trunk against the rear seat back or in the space between the two rear wheels. The fact that the valve group and, even worse, the airtight chamber, are placed right in the middle creates an additional impediment, besides the tank itself, with the obvious reduction of the trunk's loading capacity and seeing that the airtight chamber often has projecting parts of its own this also entails the risk of damaging any luggage or packages one puts inside the trunk. Furthermore, in order to access the valve group, in case of need, it is necessary to empty the trunk of all its contents, given the position of the valve group right in the middle of the tank.

In the EP-A-O 013 579 a head piece for liquified gas is disclosed which is to be mounted in a luggage compartment of a vehicle between an inlet conduit and an outlet conduit, comprising an over-pressure safety valve, a filling valve with a one-way protection etc. The head piece is of blockshaped construction and equipped with a compartment communication with the atmosphere, through which compartment any leakage gas is discharged. The head-piece fits at least in part in an opening in the tank. See especially page 2, lines 3 to 5.

However, the mentioned opening in EP-A-O 013 579 is not a cavity with walls which is provided with a cap. Further no measures are taken that the parts which are inserted into the head-piece extend beyond the outline of the wall of the tank.

The problem still remains of liquide propane gas tanks for vehicles which in the state of the art have normally valves or valve groups and the airtight chamber is placed right in the middle of the tank which creates an additional impediment with an unlikely reduction of the trunks loading capacity and with projecting parts which entails the risk of damaging any luggage or packages one puts inside the trunk. A further remedy is, that it is necessary to empty the trunk of all these contents in order to excess the valve group in case of need.

### Disclosure of invention

According to the present invention a liquid propane gas tank of a gas fuel system for vehicles, with a cavity capable of housing at least one valve group ring which is shaped such that it fits inside the cavity and with at least one valve which is placed inside the cavity, said cavity has walls and is provided with a cap, is developed in such way, that said cap of the cavity is flush-mounted in respect to a wall of the tank and said cavity is recessed in such an amount that neither the valve group ring nor the valve extends beyond the outline of the wall of the tank.

The liquid propane gas tank of cylindrical form provides said cavity located on either one of the two ends capable of housing the valve group ring, or the rings for the single valves, in the case of the embodiment designed for the foreign market, which is shaped so as to fit perfectly inside the cavity. In this manner, the front of the cylindrical tank described herein will be totally free of any protruding parts, thus enabling a better exploitation of the trunk space. Furthermore, the recessed position of the valve group ring or valve rings and of the airtight chamber also allows the easy and safe passage of the pipes to the outside, exiting through a hole in the section above the wing. The recessed cavity housing the valve group is closed by an airtight cap that may be opened if the need arises to inspect the valve group or valves.

As described above, the cavity for housing the valve group or valves may be applied to one of the two ends of the tank in such a manner that the valve group, or valves in the case of tanks designed for the foreign market, are perfectly recessed. Obviously, such a cavity may also be located on the bottom of the front of the tank, at different anlges, in which case the valve group or valves shall still be recessed and there will be no projecting parts. One of the alternative embodiments shall be provided with a transparent polycarbonate cover with holes provided with adequate seals through wich pass the knobs for opening and closing the valve group, which knobs may be easily used to open or close the gas flow without to open the cover. A specified embodiment of the invention will now be described by way of example with reference to the accompanying drawing in which:
- Figure 1: shows a section plan of a preferred embodiment;
- Figure 2: shows a front section of the valve group ring;
- Figure 3: shows a section plan of the side of an alternative embodiment of the tank with the valve group housing and valve group;

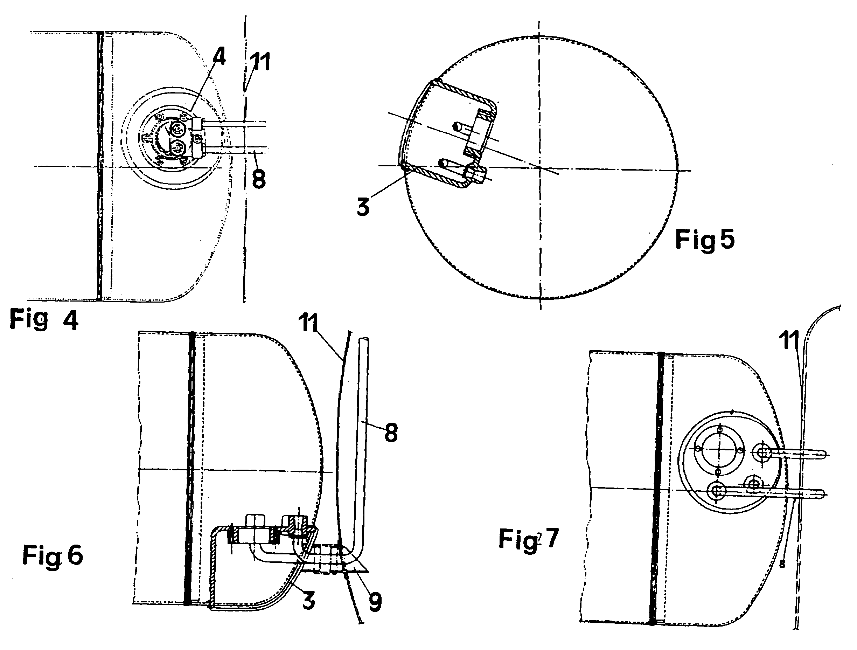

- Figure 4: shows a front view of the valve group housing and of the ring with the installed valve group;
- Figure 5: shows a front view of an embodiment of the tank with the valve rings suitable for the foreign market;
- Figure 6: shows a section plan of the valve rings on the embo diment suitable for the foreign market;
- Figure 7: shows a side view of the valve rings on the embodi ment suitable for the foreign market;
- Figure 8: shows a projection of the valve group ring;
- Figure 9: shows 4 section plan of an alternative embodiment;
- Figure 10: shows a side section of the alternative embodiment;
- Figure 11: shows a front view of the alternative embodiment shown in figs. 9 and 10;
- Figure 12: shows a cross-section of a further embodiment of the tank and the valve group housing;
- Figure 13: shows a lateral section of the embodiment under Fig. 12;
- Figure 14: shows a front view of the embodiment under Fig.12;
- Figure 15: shows a fron view of the valve group and of the polyearbonate cover of the embodiment under Fig. 12;
- Figure 16: shows a cross-section of the valve group of the embodiment under Fig: 12;
- Figure 17: shows in perspective the valve group cover and housing.

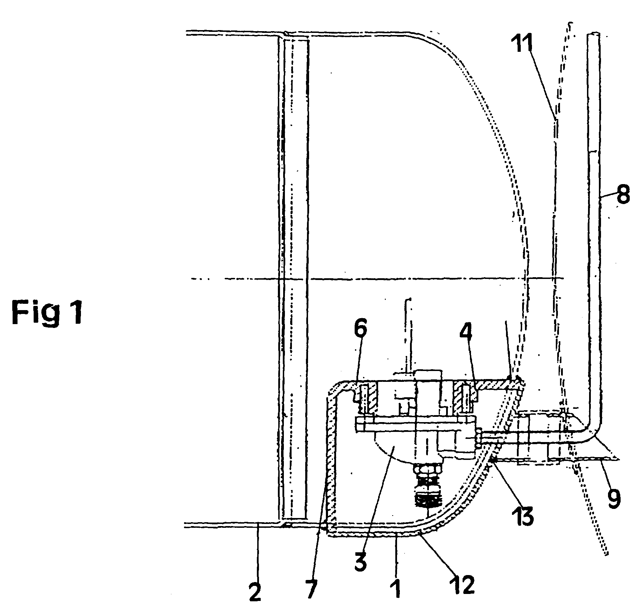

Referring to the drawings, and in particular to Figure 1, the end 1 of the tank 2 is provided with a cavity 3 housing the ring 4, or the rings in the case of the tank designed for the foreign market, for the valve group or valves 5. Said valve group ring or rings is/are shaped in such a manner as to fit perfectly inside the cavity.

The cavity will preferably have walls 6 and 7 placed at right angles and is located at the curved end 1 of the tank 2 so that even after the valve group 5 has been installed it is perfectly flush-mounted with the surface of end 1 of the tank 2.

The pipes 8 exit from the valve group and wheelhouse 11 through the passage 9, shaped like the mouthpiece of a flute, and made suitably airtight by means of silicone or any similar substance 10. An airtight cap 12, hinged in 13 so that may be opened for inspection purposes and shaped so as to be flush-mounted with the cylinder end, closes the valve group 5, or the valves, in the case of the embodiment designed for the foreign market, thus forming an airtight chamber.

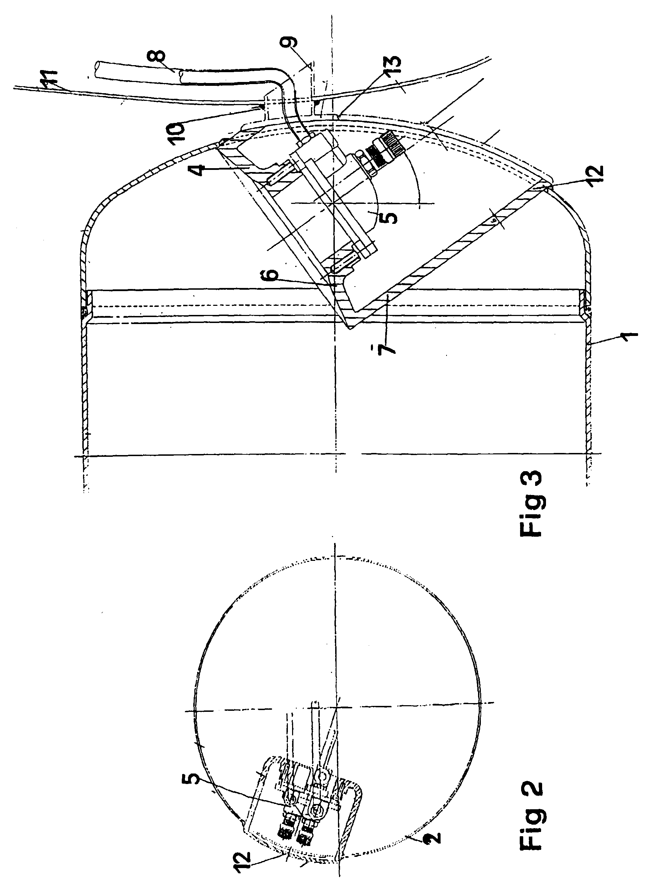

As previously mentioned, the cavity 3 at one end of the cylinder 1 may be located in different positions, with regard to the previously described Fig. 1; Fig. 3, for example, shows an alternative embodiment where the cavity has been rotated so that the parallel walls 6 and 7 form an angle with the horizontal and vertical axis of the cylindrical tank.

Figs. 2 and 3 show how the cavity housing the valve group is positioned with regard to the tank diameter, in the care also the airtight cap 12 is shaped so as to be flush mounted with the tank.

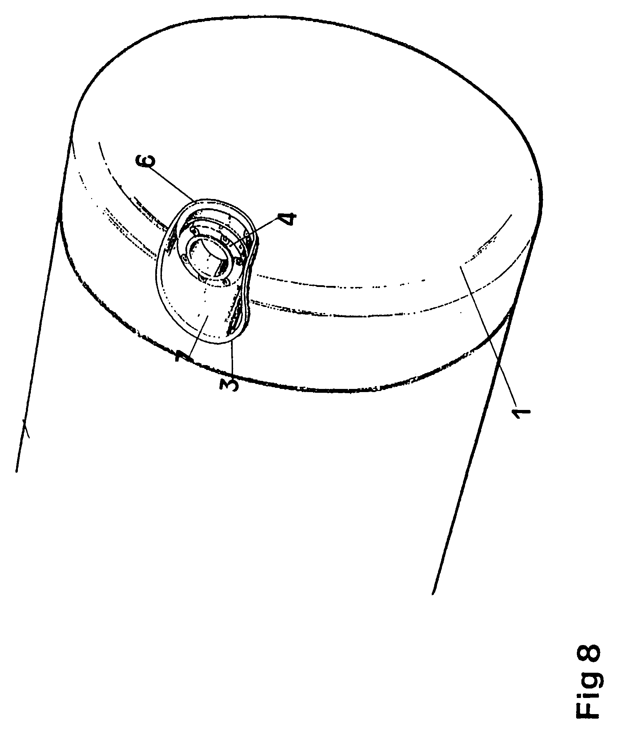

Fig. 8 shows a projection of the tank with the cavity housing the valve group ring 4 and it is clear that the valve group ring and the valve group itself no longer project outside the tank, thus taking up practically no space at all.

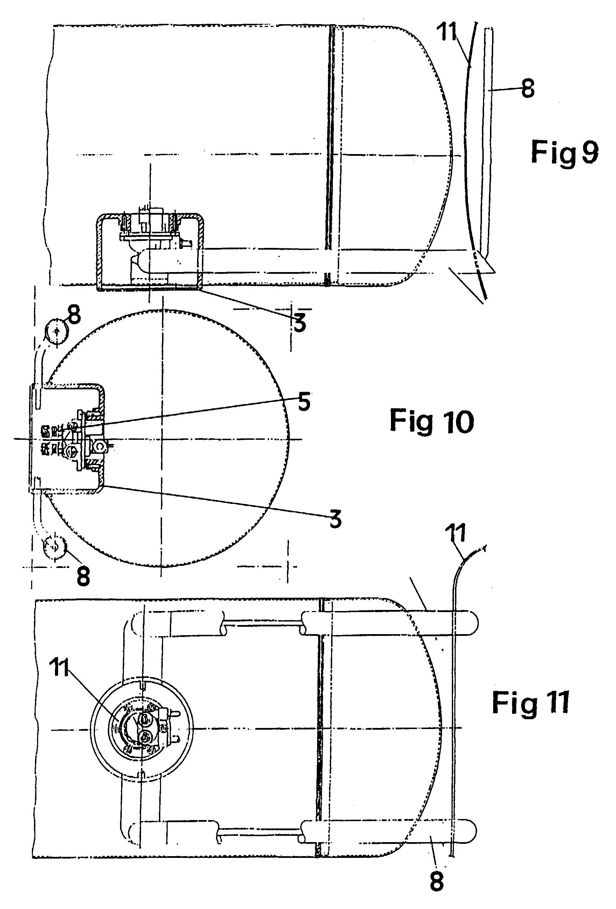

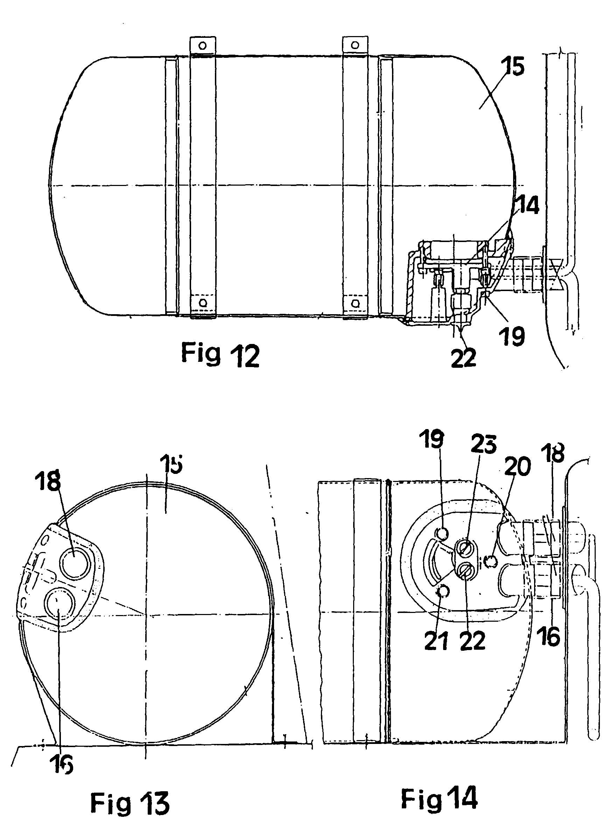

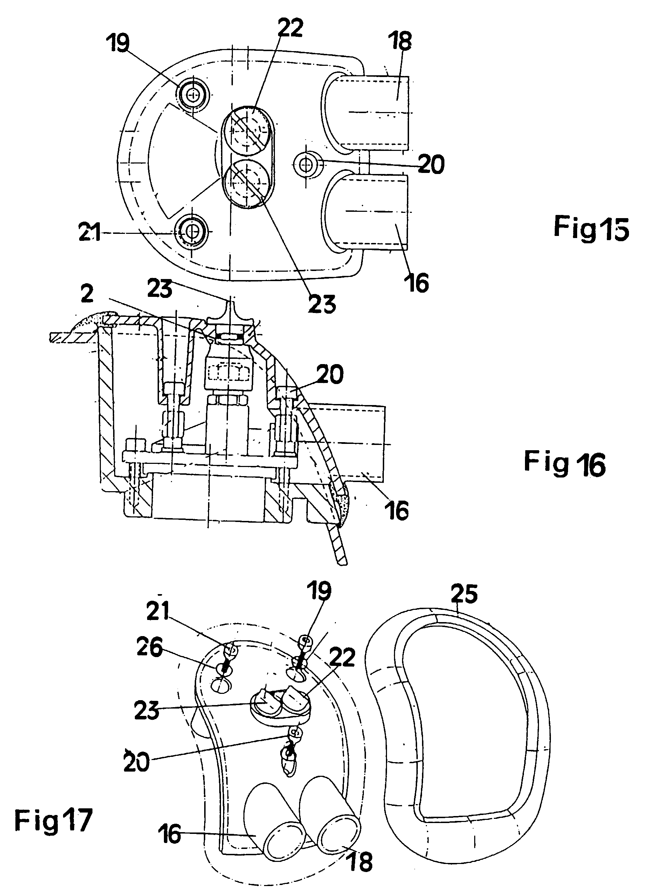

Figs. 9 and 11 show a further embodiment where the cavity housing the valve group ring 4 and the valve group, or valve rings and valves, is located at the side of the cylindrical tank, in the same position in which the valve group 5 or the valves are usually placed. In this case, the cavity 3 has a regular shape and the two pipes 8, one for filling the tank and the other for fuel supply, run alongside of the tank (see figs. 10 and 11) and exit from the two passages 9 shaped like the mouthpiece of a flute. In this case also the cavity housing the valve group or valve is sealed by an airtight cap that may be opened for inspection purposes. The recessed position of the valve group 5 does away with all projecting parts, which, on the contrary, are generally present on traditional tanks. The embodiment shown in figs. 11 to 17 has the valve group 14 housed in the specific housing 16 of the LPG tank 15. The housing 16 is closed by a polycarbonate cover 17 shaped exactly like the tank, so as to follow its contour, and provided with holes 18 out of which pass the supply and airtight chamber ventilation pipes; of holes and housings 19, 20 and 21 for the screws or other similar means for fastening the cover 17 to the valve group housing 14. In the middle of the cover 17, in an easily accessed position, there are two holes for the knobs 22 and 23 to be used for opening or closing the gas flow. The knobs 22 and 23, as may be seen in the Fig.15, are provided with seals 24 of rubber or other suitable material, thus preventing any gas leaks, even the slightest, from the airtight chamber created inside the housing 16 and by the cover 17. The knobs 22 and 23 protrude from the surface of the tank just so that they may be easily turned in case of need, without having to open the cover 17 and without creating any troublesome projections or they may even be contained inside a specifically carved housing on the cover so as to avoid any projections whatsoever.

As may be seen in Fig. 17, the cover closing the valve group housing is also provided with a specific seal 25 preventing any gas leaks and the holes 19, 20 and 21 for fastening the transparent cover, made of polycarbonate or other similar material, to the valve group housing are also provided with adequate seals. Obviously, if so required for maintenance purposes, the cover may be speedily and easily removed simply by removing the fastening means 19, 20 and 21. The advantages of the tank described herein are obvious in particular, the following must be highlighted: improved exploitation of the trunk, easy access to the valve group, even if the trunk is full, and easy installation, due to the fact that the pipes 8 required for filling the tank and supplying fuel to the engine exit from the vehicle almost im mediately, thus reducing the pipe sections inside the trunk and the necessary maintenance.

## Claims

1. Liquid propane gas tank (2) of a gas fuel system for vehicles, with a cavity (3) capable of housing at least one valve group ring (4) which is shaped such that it fits inside the cavity (3) and with at least one valve (5) which is placed inside the cavity (3), said cavity (3) has walls (6,7) and is provided with a cap (12),
**wherein** said cap (12) of the cavity (3) is flush-mounted in respect to a wall of the tank (2) and said cavity (3) is recessed in such an amount that neither the valve group ring (4) nor the valve (5) extends beyond the outline of the wall of the tank.

2. Liquid propane gas tank (2) of a gas fuel system for vehicles according to claim 1,
**wherein** pipes (8) running from the valve group exit from the vehicle almost immediately through an opening (9), shaped like a mouthpiece of a flute, and through a wheelhouse (11), said opening being sealed by means of silicone or any other similar substance.

3. Liquid propane gas tank (2) of a gas fuel system for vehicles according to claim 1 or 2,
**wherein** said cavity (3) is provided with an airtight cap (12) which is openable in order to allow inspection of the valve group and shaped so as to be flush-mounted with the end (1) of cylinder (2); said cap (12) seals the valve group (5) or the valves inside an airtight chamber.

4. Liquid propane gas tank (2) according to one of the claims 1 to 3,
**wherein** the tanks' valve group (5) housing is closed by a transparent cover (17), made of polycarbonate or any other similar material, with holes (18) through which knobs (22, 23) are insertable allowing closing and opening from the outside of the gas tank, without having to open the cover.

5. Liquid propane gas tank (2) according to claim 4,
**wherein** the knobs (22, 23) for opening and closing the gas are provided with seals preventing any gas leaks and whereby the polycarbonate cover itself and the holes (19, 20, 21) for fastening the cover (17) to the tank are also provided with adequate seals.

6. Liquid propane gas tank (2) according to one of the claims 2 to 5,
**wherein** the supply and airtight chamber ventilation pipes (8) communicate directly with the outside of the vehicle through an opening in the wheelhouse or the floor of the trunk.

## Patentansprüche

1. Flüssigpropangasbehälter (2) bei einer Treibgasanlage für Fahrzeuge, mit einem zur Aufnahme von mindestens einem Ventilgruppenring (4) geeigneten Hohlraum (3), wobei der Ring so geformt ist, dass er in das Innere des Hohlraums einpassbar ist, und mit mindestens einem Ventil (5), das im Inneren des Hohlraums (3) angeordnet ist, wobei der Hohlraum (3) Wandungen (6, 7) aufweist und mit einer Abdeckung (12) versehen ist,
**bei welchem** die Kappe (12) des Hohlraums (3) relativ zu einer Wandung des Tankbehälters (2) bündig angeordnet ist und der Hohlraum (3) um einen solchen Betrag vertieft ist, dass weder der Ventilgruppenring (4) noch das Ventil (5) über die Umrisslinie der Wandung des Behälters überstehen.

2. Flüssigpropangasbehälter (2) bei einer Treibgasanlage für Fahrzeuge nach Anspruch 1,
**bei welchem** Leitungen (8), die sich von der Ventilbaugruppe aus erstrecken, nahezu direkt aus dem Fahrzeug durch eine Öffnung (9) herausgeführt sind, welche wie das Mundstück einer Flöte geformt ist, sowie durch einen Radkasten (11), wobei die Öffnung mit Silikon oder jeder anderen vergleichbaren Substanz abgedichtet ist.

3. Flüssigpropangasbehälter (2) bei einer Treibgasanlage für Fahrzeuge nach Anspruch 1 oder 2,
**bei welchem** der Hohlraum (3) mit einer luftdichten Abdeckung (12) versehen ist, welche in der Weise zu öffnen ist, dass sie eine Sichtprüfung der Ventilbaugruppe ermöglicht, und so geformt ist, dass sie bündig mit dem Ende eines Zylinders (2) angebracht ist, und bei welchem die Abdeckung (12) luftdicht die Ventilbaugruppe (5) bzw. die Ventile im Inneren einer luftdichten Kammer abschließt.

4. Flüssigpropangasbehälter (2) nach einem der Ansprüche 1 bis 3,
**bei welchem** das Gehäuse der Ventilbaugruppe (5) des Behälters mittels eines durchsichtigen Deckels (17) aus Polycarbonat oder jedem anderen vergleichbaren Werkstoff verschlossen ist, wobei Löcher (18) vorgesehen sind, durch welche Griffknöpfe (22, 23) so einführbar sind, dass sie das Schließen und Öffnen von der Außenseite des Gasbehälters ermöglichen, ohne dass der Deckel geöffnet werden muss.

5. Flüssigpropangasbehälter (2) nach Anspruch 4,
**bei welchem** die Griffknöpfe (22, 23) zum Öffnen und Schließen der Gaszufuhr mit Dichtungen versehen sind, welche en Austreten von Gas verhindern, und wodurch der Deckel aus Polycarbonat als solcher und die Öffnungen (19, 20, 21) zum Befestigen des Deckels (17) auf dem Behälter ebenfalls mit entsprechenden Dichtungen versehen sind.

6. Flüssigpropangasbehälter (2) nach einem der Ansprüche 2 bis 5,
**bei welchem** die Zuführleitungen und die Belüftungsleitungen der luftdichten Kammer (8) in direkter Strömungsverbindung mit der Außenseite des Fahrzeugs über eine Öffnung im Radkasten oder im Boden des Kofferraums stehen.

## Revendications

1. Réservoir à gaz propane liquide (2) d'un système de carburant gazeux pour véhicules, à une cavité (3) apte à recevoir au moins un anneau à groupe de soupapes (4), qui est formé de façon qu'il s'adapte bien à l'intérieur de ladite cavité (3), et à au moins une soupape (5) placée au dedans de ladite cavité (3), ladite cavité (3) ayant des parois (6, 7) et étant pourvue d'une coiffe,,
**dans lequel** ladite coiffe (12) de ladite cavité (3) est montée de façon affleurée relativement à une paroi dudit réservoir (2), et de ladite cavité (3) est creusée par une telle mesure que ni ledit anneau à groupe de soupapes (4) ni ladite soupape (5) ne font pas saillie du contour de la paroi du réservoir.

2. Réservoir à gaz propane liquide (2) d'un système de carburant gazeux pour véhicules selon la revendication 1,
**dans lequel** des conduites (8) qui s'étendent dudit groupe de soupapes sortent du véhicule presque directement par une ouverture (9) à une forme qui ressemble la forme d'un bec d'une flûte, et à travers un couvre-roue (11), ladite ouverture étant étanche moyennant de silicone ou toute autre substance similaire.

3. Réservoir à gaz propane liquide (2) d'un système de carburant gazeux pour véhicules selon la revendication 1 ou 2,
**dans lequel** ladite cavité (3) est pourvue d'une coiffe étanche à l'air (12) apte à être ouverte afin de permettre l'inspection dudit groupe de soupapes, et formée de façon qu'elle soit montée à fleur de l'extrémité d'un cylindre (2); et dans lequel ladite coiffe (12) renferme hermétiquement ledit groupe de soupapes (5) ou les soupapes à l'intérieur d'une chambre étanche à l'air.

4. Réservoir à gaz propane liquide (2) selon une quelconque des revendications 1 à 3,
**dans lequel** le carter dudit groupe (5) de soupapes du réservoir est fermé par un couvercle transparent (17) fait en polycarbonate ou toute autre matière similaire, aux trous (18) par lesquels on peut introduire des poignées (22, 23) afin de permettre la fermeture et la ouverture de l'extérieur du réservoir à gaz, sans la nécessité d'ouvrir le couvercle.

5. Réservoir à gaz propane liquide (2) selon la revendication 4,
**dans lequel** lesdites poignées (22, 23) pour l'ouverture et la fermeture l'alimentation en gaz sont pourvues des garnitures qui empêchent des fuites de gaz, et moyennant desquelles ledit couvercle en polycarbonate en soi et les trous (19, 20, 21) à fixer ledit couvercle (17) sur le réservoir sont également pourvus des garnitures appropriées.

6. Réservoir à gaz propane liquide (2) selon une quelconque des revendications 2 à 5,
**dans lequel** les conduites d'amenée et les conduites de ventilation de la chambre étanche à l'air (8) se trouvent en communication directe avec l'extérieur du véhicule à travers une ouverture dans la couvre-roue ou le fond du coffre à bagages.
